# EUROPÄISCHE PATENTSCHRIFT

(11) **EP 4 510 969 B1**
(45) Veröffentlichungstag und Bekanntmachung des Hinweises auf die Patenterteilung: **19.11.2025**
(21) Anmeldenummer: 23832982.5
(22) Anmeldetag: 12.12.2023
(51) Int. Cl.: A61C 5/70, A61C 5/77, A61C 13/00, B33Y 10/00, B33Y 80/00

(54) **VERFAHREN ZUM HERSTELLEN EINES ZAHNERSATZTEILS**
METHOD FOR PRODUCING A DENTAL RESTORATION PART
PROCÉDÉ DE FABRICATION D'UNE PIÈCE DE RESTAURATION DENTAIRE

(30) Priorität: 15.12.2022 DE 102022133401
(43) Veröffentlichungstag der Anmeldung: 26.02.2025
(73) Patentinhaber: CERAMIST ONE GMBH, 65183 Wiesbaden (DE)
(72) Erfinder: MÜLLER, Frederic, 65193 Wiesbaden (DE)
(74) Vertreter: WSL Patentanwälte Partnerschaft mbB
(86) Internationale Anmeldenummer: PCT/EP2023/085294
(87) Internationale Veröffentlichungsnummer: WO 2024/126460

(56) Entgegenhaltungen:
- EP-A1- 0 455 854
- WO-A1-2009/073498
- DE-A1- 102016 203 055
- US-A1- 2012 052 186
- US-A1- 2013 168 887

## Beschreibung

Die vorliegende Erfindung betrifft ein Verfahren zum Herstellen eines mit einem Zahnstumpf verbindbaren Zahnersatzteils.

Zahnersatzteile werden Personen eingesetzt, um beschädigte oder verloren gegangene Zähne oder Zahnteile zu ersetzen. Dabei können Zahnersatzteile in festsitzende und herausnehmbare Zahnersatzteile unterteilt werden. Zu den herausnehmbaren Zahnersatzteilen gehören Prothesen. Zu den festsitzenden Zahnersatzteilen gehören Kronen, Teilkronen, Brücken und Veneers.

Insbesondere Kronen und Brücken werden im Mund mit bestehenden Zähnen verbunden. Hierzu wird durch einen Zahnarzt aus einem bestehenden Zahn ein Zahnstumpf geschliffen/gefräst. Die Form und Größe des Zahnstumpfes sind aufgrund unterschiedlicher Zahnformen, -größen und - neigungen sowie der manuellen Bearbeitung individuell, also von Zahnstumpf zu Zahnstumpf unterschiedlich. Von dem Zahnstumpf wird dann eine konventionelle oder digitale Abformung erstellt. Auf Basis dieser Abformung kann ein passendes Zahnersatzteil angefertigt werden, das auf den Zahnstumpf gesetzt wird und dort fixiert werden kann. Das Zahnersatzteil wird dabei in mehreren Arbeitsschritten hergestellt. So wird zunächst die grobe Form des Zahnersatzteils aus einem Rohling herausgefräst, gegossen oder lasergesintert. Danach wird das Werkstück beschliffen und poliert. Abschließend wird das Zahnersatzteil beschichtet.

Das manuelle Fertigen eines Zahnersatzteils ist sehr aufwändig. Eine Automatisierung des Fertigungsprozesses ist aber herausfordernd, da jedes Zahnersatzteil individuell angefertigt werden muss.

Bekannte Verfahren zum Herstellen von Zahnersatzteilen sind in WO 98/03128 A1, US 7,077,391 B2, WO 2009/070470 A1 und WO 2008/131159 A1 beschrieben. Keines dieser Verfahren bietet eine ausreichende Automatisierung. In allen Fällen ist eine manuelle Nacharbeit notwendig. Die DE 199 22 870 A1 offenbart nur ein Verfahren zur automatischen, individuell angepassten Färb-, Transluzenz-, Helligkeits- und Fluoreszenzgebung von zahntechnischen Restaurationen.

Weitere Verfahren sind aus EP 0 455 854 A1, US 2012/052186 A1, US 2013/168887 A1, DE 10 2010 037 160 A1, DE 10 2016 203 055 A1, EP 1 729 667 B1 und WO 2009/073498 A1 bekannt.

EP 0 455 854 A1 offenbart ein Verfahren zur Herstellung eines dentalen Passkörpers mit einer Ausnehmung, die entsprechend einem Zahnstumpf ausgearbeitet wird. Ein neben dem Passkörper verbleibender Abschnitt wird zu einem der Kontur der Ausnehmung entsprechenden Stumpf ausgearbeitet, der dann als Halte- und Stützkörper für den Passkörper dient, indem der Passkörper nach einem Abstechen des Passkörpers mit der Ausnehmung auf den Stumpf aufgesetzt wird.

Daher war es Aufgabe der Erfindung, den Automatisierungsgrad von Herstellungsverfahren für Zahnersatzteile zu erhöhen.

Diese Aufgabe wird durch ein Verfahren nach Anspruch 1 gelöst.

Das Verfahren zum Herstellen eines mit einem Zahnstumpf verbindbaren Zahnersatzteils, insbesondere eines festsitzenden Zahnersatzteils, weist folgende Schritte auf:
a) Bereitstellen eines Stumpfdatensatzes mit dreidimensionalen Daten zu Form und Größe des Zahnstumpfes
b) Herstellen eines Adapters für eine Werkzeugmaschine unter Verwendung des Stumpfdatensatzes, wobei der Adapter insbesondere einen Stumpfabschnitt aufweist, der in Form und Größe dem Zahnstumpf entspricht, und wobei der Adapter einen Kopplungsabschnitt aufweist, der mit einer Spannvorrichtung einer Werkzeugmaschine koppelbar ist
c) Herstellen eines Rohlings unter Verwendung des Stumpfdatensatzes, wobei der Rohling eine Ausnehmung aufweist, die den Zahnstumpf zumindest teilweise aufnehmen kann
d) Verbinden des Rohlings mit dem Adapter, wobei insbesondere der Stumpfabschnitt des Adapters zumindest teilweise von der Ausnehmung des Rohlings aufgenommen wird
e) Einspannen des Kopplungsabschnitts in die Spannvorrichtung der Werkzeugmaschine
f) Additives und/oder subtraktives Umarbeiten des Rohlings in das Zahnersatzteil mittels der Werkzeugmaschine
g) Entfernen des Zahnersatzteils von dem Adapter

Das Verfahren bietet den Vorteil, dass der Rohling mittels des Adapters in einer Werkzeugmaschine eingespannt werden kann, wobei die Position und Orientierung des Rohlings innerhalb der Werkzeugmaschine bekannt sind, da der Rohling auf dem Adapter angeordnet und die Geometrie des Adapters bekannt ist. Auf diese Weise kann der Rohling sehr präzise bearbeitet werden. Die präzise Bearbeitung ist sogar dann möglich, wenn der Adapter mit dem Rohling ausgespannt und wieder eingespannt wird, da die Position und Orientierung des Rohlings innerhalb der Werkzeugmaschine weiterhin durch die Geometrie des Adapters sowie der bekannten Anordnung des Adapters innerhalb der Werkzeugmaschine vorgegeben sind. Darüber hinaus kann der Rohling auch nacheinander in mehreren unterschiedlichen Werkzeugmaschinen eingespannt werden, wobei jeweils die Position und Orientierung des Rohlings eindeutig bekannt sind. Somit wird ein mehrfaches Bearbeiten des Rohlings ermöglicht. Eine manuelle Nachbearbeitung eines gefrästen Rohlings wird dadurch vermieden oder zumindest erheblich reduziert, der Automatisierungsgrad steigt.

Durch die temporäre Verbindung mit dem Adapter muss das Zahnersatzteil nach dem Entfernen von dem Adapter nicht mehr oder kaum noch nachbearbeitet werden.

Im Falle einer Brücke wird das Zahnersatzteil mit mehreren Zahnstümpfen verbunden. In diesem Fall umfasst der Stumpfdatensatz dreidimensionalen Daten zu Form und Größe sämtlicher Zahnstümpfe sowie deren Anordnung zueinander. Der Adapter kann dann mehrere Stumpfabschnitte aufweisen oder es können mehrere Adapter vorgesehen sein. Der Rohling weist dann mehrere Ausnehmungen auf, die hinsichtlich Form, Größe und relativer Anordnung zu den mehreren Zahnstümpfen passen.

Die Schritte des Verfahrens können, müssen aber nicht zwingend in der angegebenen Reihenfolge durchgeführt werden. Insbesondere können die Schritte b) und c) gleichzeitig oder hintereinander und in beliebiger Reihenfolge ausgeführt werden. Auch die Reihenfolge der Schritte d) und e) ist beliebig. Bevorzugt wird der Schritt a) vor den Schritten b) und c) durchgeführt. Ferner bevorzugt werden die Schritte d) bis g) nach den Schritten b) und c) durchgeführt. Ferner bevorzugt wird der Schritt f) nach den Schritten d) und e) durchgeführt. Ferner bevorzugt wird der Schritt g) nach dem Schritt f) durchgeführt. Anstelle eines einmaligen Einspannens und dem anschließenden Umarbeiten (Schritte e) und f)) kann der Kopplungsabschnitt auch mehrfach aus- und eingespannt werden (in die gleiche oder eine andere Werkzeugmaschine), wobei er in eingespanntem Zustand jeweils additiv und/oder subtraktiv umgearbeitet wird. Dies kann beliebig oft wiederholt werden, ohne dass die Präzision der Umarbeitung leidet.

Unter einem Zahnstumpf wird insbesondere ein aus einem (menschlichen) Zahn gefertigter, insbesondere kegelstumpfförmiger, Körper verstanden, auf und/oder an dem ein Zahnersatzteil permanent angeordnet werden kann. Der Zahnstumpf ist insbesondere in einem Mund einer zu behandelnden Person angeordnet.

Unter einem Rohling wird eine Vorstufe des Zahnersatzteils verstanden. Der Rohling ist somit ein Halbzeug. Der Rohling kann bereits eine Form aufweisen, die grob jener des zu fertigenden Zahnersatzteils entspricht, er kann aber auch beispielsweise blockförmig sein. In jedem Fall weist der Rohling eine Ausnehmung für den Zahnstumpf bzw. den Stumpfabschnitt des Adapters auf. Der Rohling weist insbesondere keinen Kopplungsabschnitt zum Koppeln des Rohlings mit einer Spannvorrichtung einer Werkzeugmaschine auf, denn der Rohling wird über den Adapter mit einer Spannvorrichtung temporär verbunden.

Die Ausnehmung ist bevorzugt größer als der Stumpfabschnitt, sodass zwischen den Bauteilen beispielsweise ein Klebstoff angeordnet werden kann, der die Bauteile miteinander verbindet. An der Präparationsgrenze, also dem Übergang zwischen Stumpfabschnitt und Verbindungsabschnitt, kann die Ausnehmung jedoch so dimensioniert sein, dass der Rohling den Stumpfabschnitt berührt. Dadurch wird eine eindeutige Positionierung des Rohlings zu dem Adapter sichergestellt. Auch bei der späteren Verwendung des Zahnersatzteils liegt dieses an der Präparationsgrenze an dem Zahnstumpf. Alternativ ist es aber auch möglich, dass der Stumpfabschnitt an der Präparationsgrenze in seiner Form von dem (echten) Zahnstumpf abweicht und sich Rohling und Adapter dort nicht berühren. Dadurch wird eine Beschädigung des Rohlings an dieser Stelle vermieden und die Bearbeitung des Rohlings um diese Stelle herum erleichtert.

Es ist im Rahmen des erfindungsgemäßen Verfahrens möglich, dass ein Rohling zwei (oder mehr) Ausnehmungen aufweist und zwei (oder mehr) unterschiedliche Adapter vorgesehen sind, wobei die Stumpfabschnitte der Adapter und die Ausnehmungen des Rohlings an zwei (oder mehr) unterschiedliche Zahnstümpfe angepasst sind. Auf diese Weise kann beispielsweise eine große Brücke hergestellt werden, die auf zwei (oder mehr) weit auseinanderliegenden Zahnstümpfen angebracht werden soll.

Die Spannvorrichtung der Werkzeugmaschine kann auch als Aufnahme/Futter bezeichnet werden. Es handelt sich insbesondere um ein Nullpunktspannsystem. Das Nullpunktspannsystem ermöglicht es, die Position und Orientierung des Rohlings besonders präzise zu ermitteln, was sich positiv auf die Umarbeitung des Rohlings in das Zahnersatzteil auswirkt.

Die Werkzeugmaschine ist insbesondere eine CNC-Maschine, bevorzugt eine CNC-Maschine zum additiven und/oder subtraktiven Bearbeiten von Werkstücken, beispielsweise eine CNC-Fräsmaschine.

Neben dem Stumpfdatensatz können noch weitere Datensätze in dem Verfahren verwendet werden, insbesondere ein Zahndatensatz, der dreidimensionale Daten zu Form und Größe des Zahnersatzteils umfasst, insbesondere zu dessen Außenseite (u.a. Kaufläche, Lippenfläche, Zungenfläche, Okklusalfläche, Labialfläche, Lingualfläche). Vorteilhafterweise wird zur Herstellung des Rohlings in Schritt c) und/oder bei dem Umarbeiten des Rohling in Schritt f) der Zahndatensatz verwendet. In Schritt c) kann durch Kombination des Stumpfdatensatzes mit dem Zahndatensatz ein vollständiges 3D-Modell des Rohlings erstellt und auf dieser Basis der Rohling hergestellt werden. In Schritt f) kann beispielsweise unter Verwendung des Zahndatensatzes ein blockförmiger Rohling in das Zahnersatzteil umgearbeitet werden.

Der Adapter in Schritt b) und/oder der Rohling in Schritt c) wird vorteilhafterweise durch Gießen und/oder durch subtraktive Verfahren, insbesondere Fräsen, Schleifen und/oder Drehen, und/oder durch additive Verfahren, insbesondere Lasersintern, hergestellt. Sowohl Adapter als auch Rohling sind für sich bevorzugt einteilig. Beim Gießen kann beispielsweise zunächst aus einem Wachsblock eine Form des herzustellenden Bauteils gefräst werden. Die Form wird dann eingebettet, das Wachs ausgebrannt und das flüssige Metall in die Hohlform eingegossen.

Vorteilhafterweise umfassen der Adapter und/oder der Rohling Keramik, insbesondere Zirkoniumdioxid und/oder Lithiumdisilikat. ein Metall und/oder eine Metalllegierung, Werden Adapter und/oder Rohling für sich vollständig aus einem einzigen Material hergestellt, erhalten sie eine besondere Stabilität. Zirkoniumdioxid ist ein besonders stabiles Material und eignet sich insbesondere für größere Zahnersatzteile wie Brücken.

Die für den Rohling und den Adapter verwendeten Materialien sind teuer. Bei manchen Ausführungsformen wird daher in Schritt b) ein mehrteiliger Adapter hergestellt. Dabei weist bevorzugt ein Teil des mehrteiligen Adapters den Stumpfabschnitt und ein anderer Teil des mehrteiligen Adapters den Kopplungsabschnitt auf. Die Teile können temporär miteinander verbunden werden, beispielsweise durch einen Klebstoff. Auf diese Weise kann der Teil mit dem Kopplungsabschnitt nacheinander für verschiedene Adapter verwendet werden, wodurch eine Kostenersparnis erzielt wird. Der Schritt b) kann demnach auch die Verwendung eines bereits vorhandenen Teils mit dem Kopplungsabschnitt beinhalten, wobei zusätzlich der Teil mit dem Stumpfabschnitt hergestellt und mit dem anderen Teil verbunden wird, um den Adapter herzustellen.

Die Schritte b) und c) können jeweils ein Sintern des Adapters bzw. des Rohlings beinhalten. In diesem Fall wird zunächst ein Grünling hergestellt, beispielsweise durch Gießen und/oder Fräsen, und der Grünling wird anschließend gesintert, wodurch der Adapter bzw. der Rohling hergestellt wird. Der Grünling schrumpft (schwindet) beim Sintern und wird daher zunächst mit Übermaß hergestellt. Nach dem Sintern kann der Adapter bzw. der Rohling weiterbearbeitet werden, insbesondere subtraktiv und/oder additiv, um die gewünschte Endform herzustellen.

Bei vorteilhaften Weiterbildungen wird der Stumpfdatensatz in Schritt a) durch Erfassen der Form und Größe des Zahnstumpfes sowie bevorzugt ferner der relativen Anordnung mehrerer Zahnstümpfe bereitgestellt. Alternativ kann in Schritt a) auch ein bereits vorliegender Stumpfdatensatz bereitgestellt werden. Das Erfassen der Form und Größe des Zahnstumpfes sowie optional der relativen Anordnung mehrerer Zahnstümpfe erfolgt bevorzugt unmittelbar im Mund einer zu behandelnden Person (intraoraler Scan) oder durch Scannen eines Modells (Modellscan), insbesondere eines Gipsmodells. Hierzu kann ein Intraoralscanner verwendet werden.

Für die Umarbeitung des Rohlings ist es vorteilhaft, wenn Rohling und Adapter fest miteinander verbunden sind. Andernfalls besteht die Gefahr, dass sich der Rohling während der Bearbeitung von dem Adapter löst oder beschädigt wird. Bei vorteilhaften Weiterbildungen wird der Rohling in Schritt d) lösbar stoffschlüssig mit dem Adapter verbunden, insbesondere mittels eines Klebstoffs und/oder Zements. Eine stoffschlüssige Verbindung stellt eine feste Verbindung sicher. Aufgrund der Lösbarkeit der Verbindung können Zahnersatzteil und Adapter nach der Umarbeitung weitgehend zerstörungsfrei voneinander getrennt werden. Das Trennen kann beispielsweise durch Aufschmelzen des Klebstoffs erfolgen.

Bevorzugt wird die Ausnehmung in Schritt c) hinsichtlich Form und Größe derart ausgestaltet, dass bei dem Verbinden in Schritt d) ein Zwischenvolumen zwischen Ausnehmung und Stumpfabschnitt verbleibt, wobei das Zwischenvolumen mit einem Verbindungsstoff, insbesondere einem Klebstoff und/oder Zement, gefüllt wird. Durch das Zwischenvolumen wird ein definierter Raum geschaffen, in dem der Verbindungsstoff angeordnet wird und den Rohling mit dem Adapter verbinden kann. So wird eine sichere Verbindung geschaffen.

Wie bereits erwähnt wurde, soll das Entfernen des Zahnersatzteils von dem Adapter möglichst zerstörungsfrei erfolgen. Bei vorteilhaften Weiterbildungen wird das Zahnersatzteil in Schritt g) daher von dem Adapter entfernt, indem die stoffschlüssige Verbindung aufgeschmolzen wird, insbesondere in einem Ofen. Bevorzugt wird daher zunächst der Adapter mit daran befestigtem Zahnersatzteil aus der Werkzeugmaschine entnommen, also aus der Spannvorrichtung entfernt und anschließend werden Adapter und Zahnersatzteil voneinander getrennt.

Bei vorteilhaften Weiterbildungen umfasst das additive Umarbeiten in Schritt f) ein Beschichten und/oder das subtraktive Umarbeiten in Schritt f) ein Fräsen, ein Schleifen und/oder ein Polieren. Das Beschichten (Verblenden) stellt bevorzugt den letzten Arbeitsschritt dar. Sowohl für das Beschichten als auch für das Fräsen, Schleifen und Polieren ist es vorteilhaft, wenn die genaue Position und Orientierung des Rohlings in der Werkzeugmaschine bekannt ist, was aufgrund des Adapters der Fall ist.

Bei einer nicht erfindungsgemäßen Weiterbildung werden Adapter und Rohling einteilig als Adapter-Rohling-Teil hergestellt, bevorzugt durch Gießen und/oder durch subtraktive Verfahren, insbesondere Fräsen, Schleifen und/oder Drehen, und/oder durch additive Verfahren. Der Adapter weist dann keinen Stumpfabschnitt auf. Das kombinierte Adapter-Rohling-Teil wird dabei unter Verwendung des Stumpfdatensatzes hergestellt. Der Rohling weist bereits eine Ausnehmung auf, die den Zahnstumpf zumindest teilweise aufnehmen kann. Das Adapter-Rohling-Teil weist einen Kopplungsabschnitt auf, der in Schritt e) in die Spannvorrichtung der Werkzeugmaschine eingespannt werden kann. Daraufhin kann der Rohling in das Zahnersatzteil umgearbeitet werden. Bevorzugt erfolgt vor oder nach dem Umarbeiten eine Sinterbehandlung des Adapter-Rohling-Teils. Das Entfernen des Zahnersatzteils von dem Adapter erfolgt bei diesen Weiterbildungen bevorzugt durch Zerspanen nach Abschluss des Umarbeitens und insbesondere in der gleichen Werkzeugmaschine.

Offenbart wird auch ein Adapter für eine Werkzeugmaschine, insbesondere hergestellt durch den Schritt b) des Verfahrens nach der obigen Beschreibung, mit einem Stumpfabschnitt, der in Form und Größe einem Zahnstumpf entspricht, und einem Kopplungsabschnitt, der mit einer Spannvorrichtung einer Werkzeugmaschine koppelbar ist. Der Stumpfabschnitt entspricht insbesondere in Form und Größe einem individuellen Zahnstumpf.

Der Kopplungsabschnitt des Adapters weist insbesondere eine zylindrische Form mit einer umlaufenden Nut und insbesondere mit einem halbkugelförmigen Ende auf. Diese Form ist für viele Spannvorrichtungen von Werkzeugmaschinen geeignet, was die Verwendung des Adapters in vielen verschiedenen Werkzeugmaschinen ermöglicht. Generell kann der Kopplungsabschnitt aber jede beliebige, zu der Spannvorrichtung einer bestimmten Werkzeugmaschine passenden Form und Größe aufweisen. Die Vorteile ergeben sich dann insbesondere bei der Verwendung des Adapters zusammen mit einer oder mehreren passenden Werkzeugmaschinen.

Der Verbindungsabschnitt ist bevorzugt geschwungen ausgeführt, also insbesondere nicht gerade, was die nachträgliche Bearbeitung inklusive einer Beschichtung des Rohlings vereinfacht, da die einzelnen Werkzeuge einer Werkzeugmaschine besseren Zugang zu den relevanten Stellen des Rohlings haben. Eine gerade Ausführung des Verbindungsabschnitts kann aber insbesondere bei Einzelkronen ausreichend sein und der Verbindungsabschnitt selbst ist dann einfacher herzustellen.

An dem Stumpfabschnitt kann ein Rohling eines Zahnersatzteils temporär und lösbar befestigt werden. Dadurch kann der Rohling in einer Werkzeugmaschine eingespannt werden, wobei die Position und Orientierung des Rohlings innerhalb der Werkzeugmaschine bekannt ist, da der Rohling auf dem Adapter angeordnet und die Geometrie des Adapters bekannt ist. Auf diese Weise kann der Rohling sehr präzise bearbeitet werden. Die präzise Bearbeitung ist sogar dann möglich, wenn der Adapter mit dem Rohling ausgespannt und wieder eingespannt wird, da die Position und Orientierung des Rohlings innerhalb der Werkzeugmaschine weiterhin durch die Geometrie des Adapters und dessen eindeutige Anordnung innerhalb der Werkzeugmaschine vorgegeben sind. Darüber hinaus kann der Rohling auch nacheinander in mehreren unterschiedlichen Werkzeugmaschinen eingespannt werden, wobei jeweils die Position und Orientierung des Rohlings eindeutig bekannt sind. Somit wird ein mehrfaches Bearbeiten des Rohlings ermöglicht. Eine manuelle Nachbearbeitung eines gefrästen Rohlings wird dadurch vermieden oder zumindest erheblich reduziert.

Der Stumpfabschnitt und/oder der Kopplungsabschnitt bildet bevorzugt ein Ende des Adapters aus. Weist der Adapter nur einen Stumpfabschnitt und nur einen Kopplungsabschnitt auf, so ist der Adapter bevorzugt länglich und weist zwei Enden auf.

Zu den Zahnersatzteilen gehören auch Brücken. Eine Brücke überbrückt mehrere nebeneinander liegende Zähne. Eine Brücke wird dabei an mehreren Zahnstümpfen fixiert. Damit auch eine Brücke präzise hergestellt werden kann, weist der Adapter vorteilhafterweise mehrere Stumpfabschnitte auf, wobei jeder Stumpfabschnitt in Form und Größe einem unterschiedlichen Zahnstumpf entspricht. Auf den Stumpfabschnitten kann dann ein Rohling einer Brücke angeordnet werden. Die relative Anordnung der Zahnstümpfe zueinander wird insbesondere wie die Form und Größe der einzelnen Zahnstümpfe unter Verwendung des Stumpfdatensatzes festgelegt.

Der Adapter ist bevorzugt einteilig. Dadurch ist der Adapter sehr stabil und hält den Rohling präzise an dem vorgesehenen Ort. Dadurch wird eine präzise Umarbeitung des Rohlings ermöglicht. Alternativ kann der Adapter mehrteilig sein. Bevorzugt weist dann ein Adapterteil des mehrteiligen Adapters den Stumpfabschnitt und ein anderer Adapterteil des mehrteiligen Adapters den Kopplungsabschnitt auf. Der Adapterteil mit dem Kopplungsabschnitt kann dann mit mehreren unterschiedlichen Adapterteilen mit Stumpfabschnitt verwendet werden, wodurch eine Kostenersparnis bei der Herstellung des Adapters erzielt wird.

Vorteilhafterweise umfasst der Adapter Keramik, insbesondere Zirkoniumdioxid und/oder Lithiumdisilikat, ein Metall und/oder eine Metalllegierung. Wird der Adapter vollständig aus einem Material hergestellt, erhält er eine besondere Stabilität. Zirkoniumdioxid ist ein besonders stabiles Material und eignet sich insbesondere für größere Zahnersatzteile wie Brücken.

Der Adapter kann durch die oben beschriebenen vorteilhaften Weiterbildungen fortgebildet werden.

Offenbart wird auch ein Rohling eines Zahnersatzteils, insbesondere hergestellt durch den Schritt c) des oben beschriebenen Verfahrens, mit einer Ausnehmung, die einen Zahnstumpf zumindest teilweise aufnehmen kann. Die Ausnehmung ermöglicht, dass der Rohling auf einem Adapter, insbesondere dem oben beschriebenen Adapter, temporär und lösbar befestigt werden und anschließend in einer Werkzeugmaschine präzise zu einem Zahnersatzteil umgearbeitet werden kann.

Der Rohling kann durch die oben beschriebenen vorteilhaften Weiterbildungen fortgebildet werden.

Offenbart wird auch ein Set aus mindestens einem oben beschriebenen Adapter und mindestens einem Rohling nach der obigen Beschreibung, wobei der Stumpfabschnitt wenigstens eines Adapters und die Ausnehmung wenigstens eines Rohlings an den gleichen Zahnstumpf angepasst sind. Dadurch wird sichergestellt, dass der Rohling an dem Stumpfabschnitt temporär und lösbar befestigt werden kann. Dadurch kann der Rohling in einer Werkzeugmaschine eingespannt werden, wobei die Position und Orientierung des Rohlings innerhalb der Werkzeugmaschine bekannt ist. Auf diese Weise kann der Rohling sehr präzise bearbeitet werden. Darüber hinaus kann der Rohling auch nacheinander in mehreren unterschiedlichen Werkzeugmaschinen eingespannt werden. Somit wird ein mehrfaches Bearbeiten des Rohlings ermöglicht. Eine manuelle Nachbearbeitung eines gefrästen Rohlings wird dadurch vermieden.

Es ist dabei möglich, dass ein Rohling zwei (oder mehr) Ausnehmungen aufweist und zwei (oder mehr) unterschiedliche Adapter vorgesehen sind, wobei die Stumpfabschnitte der Adapter und die Ausnehmungen des Rohlings an zwei (oder mehr) unterschiedliche Zahnstümpfe angepasst sind. Auf diese Weise kann beispielsweise eine große Brücke hergestellt werden, die auf zwei (oder mehr) weit auseinanderliegenden Zahnstümpfen angebracht werden soll.

Offenbart wird auch ein Set aus mehreren Adaptern nach der obigen Beschreibung, wobei der Kopplungsabschnitt bei jedem Adapter identisch ist und die Stumpfabschnitte der Adapter unterschiedlich, insbesondere an unterschiedliche Zahnstümpfe angepasst, sind. Durch ihre identischen Kopplungsabschnitte können die Adapter alle mit der gleichen Spannvorrichtung einer Werkzeugmaschine verwendet werden. Gleichzeitig sind die Adapter individuell und an einen vorgegebenen Zahnstumpf angepasst. Auf diese Weise können in der gleichen Werkzeugmaschine Zahnersatzteile für verschiedene Zahnstümpfe hergestellt werden.

Offenbart wird ferner ein Verfahren zum Herstellen eines mit einem Zahnstumpf verbindbaren Zahnersatzteils, insbesondere eines festsitzenden Zahnersatzteils, mit folgenden Schritten:
aa) Bereitstellen eines Stumpfdatensatzes mit dreidimensionalen Daten zu Form und Größe des Zahnstumpfes
bb) Herstellen eines Adapter-Rohling-Teils aufweisend einen Rohling und einen einteilig mit dem Rohling verbundenen Adapter, wobei der Rohling eine Ausnehmung aufweist, die den Zahnstumpf zumindest teilweise aufnehmen kann und wobei der Adapter einen Kopplungsabschnitt aufweist, der mit einer Spannvorrichtung einer Werkzeugmaschine koppelbar ist
cc) Einspannen des Kopplungsabschnitts in die Spannvorrichtung der Werkzeugmaschine
dd) Additives und/oder subtraktives Umarbeiten des Rohlings in das Zahnersatzteil mittels der Werkzeugmaschine
ee) Entfernen des Zahnersatzteils von dem Adapter

Das Verfahren bietet ebenfalls die oben genannten Vorteile, insbesondere die präzise Bearbeitungsmöglichkeit des Rohlings und die Möglichkeit der Bearbeitung und auch der mehrfachen Bearbeitung des Rohlings in einer oder mehreren Werkzeugmaschinen. Auch dieses Verfahren ist durch die oben beschriebenen, vorteilhaften Weiterbildungen, weiterbildbar.

Bevorzugt wird das Adapter-Rohling-Teil gesintert, insbesondere nach Schritt bb) und/oder vor Schritt cc). Dadurch schrumpft das Adapter-Rohling-Teil, was bei der Herstellung in Schritt bb) bereits berücksichtigt wird.

Die Erfindung wird nachfolgend anhand der Zeichnungen beispielhaft dargestellt und erläutert. Es zeigt dabei
- Figur 1:: einen Zahnstumpf in einem Mund einer zu behandelnden Person in einer schematischen Darstellung
- Figur 2:: ein Set aus einem Adapter und einem Rohling, teilweise im Schnitt, in einer schematischen Darstellung
- Figur 3:: den Adapter und den Rohling der Figur 2 in verbundenem Zustand, teilweise im Schnitt, in einer schematischen Darstellung
- Figur 4:: den Zahnstumpf der Figur 1 mit einem Zahnersatzteil, teilweise im Schnitt, in einer schematischen Darstellung
- Figur 5:: eine weitere Ausführungsform eines Sets aus einem Adapter und einem Zahnersatzteil in einer schematischen Darstellung
- Figur 6:: eine weitere Ausführungsform eines Sets aus einem Adapter und einem Zahnersatzteil in einer schematischen Darstellung
- Figur 7:: schematisch den Verfahrensablauf einer Ausführungsform des erfindungsgemäßen Verfahrens
- Figur 8:: eine nicht erfindungsgemäße Ausführungsform eines Adapter-Rohling-Teils in einer schematischen Darstellung
- Figur 9:: ein Set aus einem Adapter und einem Rohling, teilweise im Schnitt, in einer schematischen Darstellung

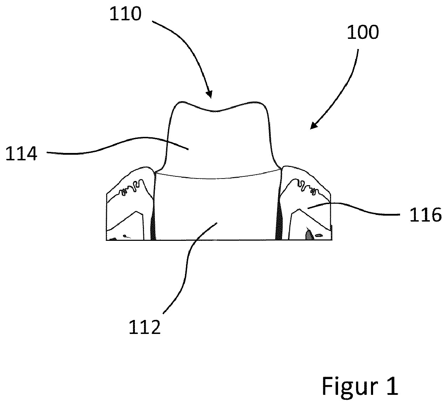

In Figur 1 ist schematisch ein Ausschnitt eines Kiefers 100 einer zu behandelnden Person gezeigt. In dem Kiefer 100 ist ein Zahnstumpf 110 angeordnet, der von einem Zahnarzt aus einem bestehenden Zahn geschliffen wurde. Der Zahnstumpf 110 weist in etwa die Form eines Kegelstumpfes auf. Im unteren Bereich 112 ist der Zahnstumpf 110 von Zahnfleisch 116 umgeben. Der obere Bereich 114 des Zahnstumpfes 110 soll mit einer Krone (hier nicht dargestellt) versehen werden.

Die Form und Größe des Zahnstumpfes 110 kann vermessen werden, beispielsweise mittels eines intraoralen 3D-Scans. Durch diesen Scan wird ein Stumpfdatensatz mit dreidimensionalen Daten bereitgestellt, welche Auskunft über die Form und Größe des Zahnstumpfes 110 geben.

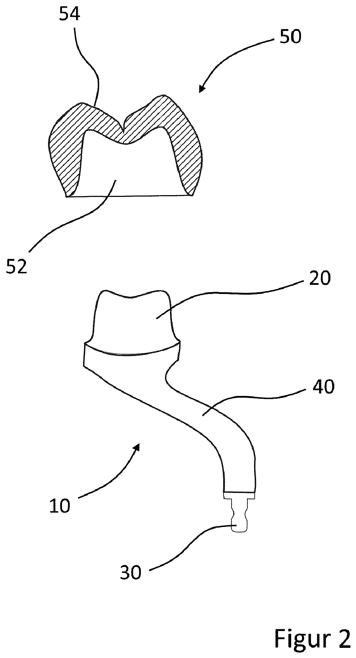

Auf Basis dieser Daten kann dann ein Adapter 10, wie er in Figur 2 dargestellt ist, hergestellt werden. Der Adapter 10 umfasst einen Stumpfabschnitt 20, der in Form und Größe dem Zahnstumpf 110 der Figur 1 entspricht. Der Adapter 10 umfasst ferner einen Kopplungsabschnitt 30, der so ausgestaltet ist, dass er mit einer Spannvorrichtung einer Werkzeugmaschine (nicht dargestellt) koppelbar ist, insbesondere einem Schnellspannsystem. Bei der gezeigten Ausführungsform ist der Kopplungsabschnitt 30 derart ausgestaltet, dass er mit einem Nullpunktspannsystem koppelbar ist.

Der Stumpfabschnitt 20 und der Kopplungsabschnitt 30 sind an gegenüberliegenden Enden des Adapters 10 angeordnet und werden durch einen Verbindungsabschnitt 40 miteinander verbunden.

Der Kopplungsabschnitt 30 und der Verbindungsabschnitt 40 werden ebenfalls auf Basis von dreidimensionalen Daten gefräst. Dabei ist der Kopplungsabschnitt 30 unterschiedlicher Adapter 10 identisch. Die Adapter 10 unterscheiden sich dann hinsichtlich ihrer Stumpfabschnitte 20 und optional auch hinsichtlich ihrer Verbindungsabschnitte 40.

Der Adapter 10 wurde durch Fräsen aus einem Vollmaterial hergestellt. Hierzu werden die dreidimensionalen Daten des Stumpfdatensatzes mit dreidimensionalen Daten des Kopplungsabschnitts 30 und des Verbindungsabschnitts 40 zu einem 3D-Modell kombiniert. Dieses 3D-Modell ist dann Grundlage für die Herstellung des Adapters 10.

In Figur 2 ist zusätzlich ein Rohling 50 dargestellt. Der Rohling 50 wurde ebenfalls unter Verwendung des Stumpfdatensatzes hergestellt und weist eine Ausnehmung 52 sowie eine Außenseite 54 auf. Die Ausnehmung 52 ist auf Basis des Stumpfdatensatzes hinsichtlich Größe und Form derart ausgestaltet, dass sie den Stumpfabschnitt 20 oder den Zahnstumpf 110 aufnehmen kann, wobei die Ausnehmung 52 größer als den Stumpfabschnitt 20 ist, sodass ein Zwischenvolumen verbleibt.

Die Form der Außenseite 54 wurde bei der gezeigten Ausführungsform unter Verwendung eines Zahndatensatzes gefertigt. Der Zahndatensatz umfasst dreidimensionale Daten der gewünschten Form und Größe des Zahnersatzteils (hier nicht dargestellt). Bei anderen Ausführungsformen kann die Außenseite 54 des Rohlings 50 auch blockförmig sein.

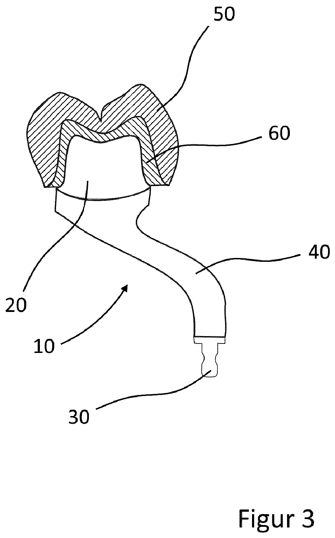

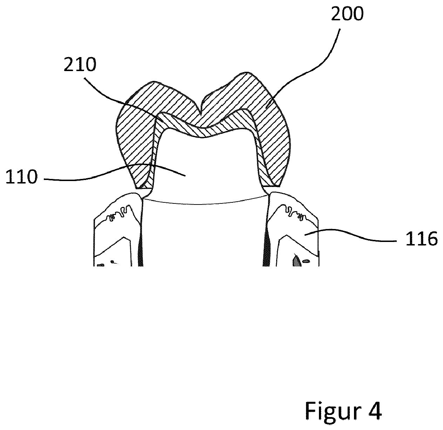

Der Adapter 10 und der Rohling 50 werden dann miteinander verbunden (Figur 3). Hierzu wird der Stumpfabschnitt 20 in der Ausnehmung 52 angeordnet. Das Zwischenvolumen wurde mit einem lösbaren Klebstoff 60 gefüllt. Durch den Klebstoff 60 werden der Adapter 10 und der Rohling 50 lösbar und stoffschlüssig miteinander verbunden. In diesem Zustand kann der Verbund aus Adapter 10 und Rohling 50 in einer oder nacheinander in mehreren Werkzeugmaschinen angeordnet werden. Dort wird der Rohling 50 additiv und/oder subtraktiv zu einem Zahnersatzteil 200 (siehe Figur 4), hier einer Krone, umgearbeitet. Aufgrund der bekannten Form und Größe von Adapter 10 und Rohling 50 sowie der genauen Anordnung des Adapters 10 in dem Nullpunktspannsystem der Werkzeugmaschine kann der Rohling 50 sehr präzise bearbeitet werden.

Wurde der Rohling 50 zu dem Zahnersatzteil 200 umgearbeitet, wird das Zahnersatzteil 200 von dem Adapter 10 gelöst. Bei einem aufschmelzbaren Klebstoff 60 kann der Verbund aus Adapter 10 und Zahnersatzteil 200 in einem Ofen erhitzt werden. Nach dem Erhitzen kann das Zahnersatzteil 200 von dem Adapter 10 getrennt werden. Anschließend kann das Zahnersatzteil 200 direkt auf dem Zahnstumpf 110 angeordnet und mit diesem verbunden werden, beispielsweise mittels Zement 210 (Figur 4).

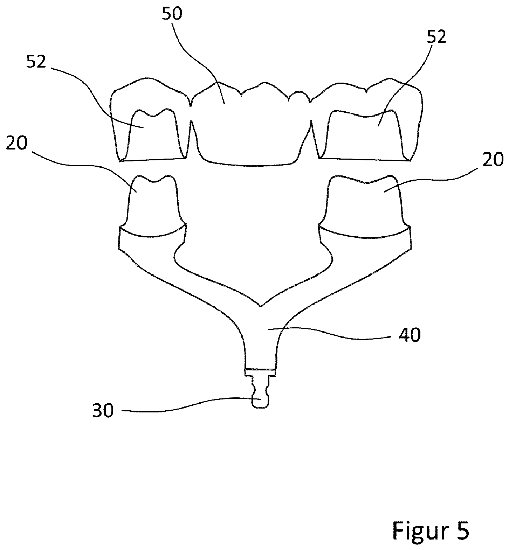

Die Figur 5 zeigt eine weitere Ausführungsform eines Sets aus einem Adapter 10 und einem Rohling 50. Der Rohling 50 ist bei dieser Ausführungsform für die Herstellung einer Brücke als Zahnersatzteil 200 vorgesehen. Der Adapter 10 umfasst einen Kopplungsabschnitt 30, mit dem er in einer Spannvorrichtung einer Werkzeugmaschine eingespannt werden kann.

Der Adapter 10 umfasst ferner einen Verbindungabschnitt 40, der Y-förmig ist, sich also gabelt. An dem einzelnen Ende ist der Verbindungsabschnitt 40 mit dem Kopplungsabschnitt 30 verbunden. An den zwei weiteren Enden ist jeweils ein Stumpfabschnitt 20 vorgesehen. Die Stumpfabschnitte 20 sind in Form und Größe sowie hinsichtlich ihrer relativen Anordnung an zwei Zahnstümpfe (hier nicht dargestellt) angepasst. Der Rohling 50 weist zwei Ausnehmungen 52 auf und wird mit beiden Stumpfabschnitten 20 verbunden. Anschließend kann der Kopplungsabschnitt 30 in die Spannvorrichtung eingespannt und der Rohling 50 additiv und/oder subtraktiv in eine Brücke umgearbeitet werden.

Anschließend wird die Brücke von dem Adapter 10 getrennt und kann in den Mund einer zu behandelnden Person eingesetzt werden.

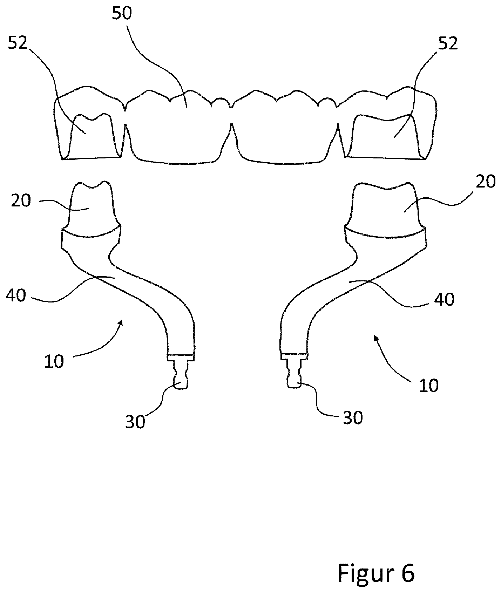

In der Figur 6 ist eine weitere Ausführungsform eines Sets dargestellt. Das Set wird zur Herstellung einer großen Brücke verwendet, die bei bestimmungsgemäßem Gebrauch auf zwei Zahnstümpfe (hier nicht dargestellt) aufgesetzt wird, zwischen denen zwei weitere, leere Zahnpositionen liegen. Bei dieser Ausführungsform umfasst das Set zwei Adapter 10 und einen Rohling 50. Jeder der Adapter 10 weist einen Stumpfabschnitt 20, der in Form und Größe einem der beiden Zahnstümpfe entspricht, auf. Beide Adapter 10 umfassen jeweils einen Kopplungsabschnitt 30, die so ausgestaltet sind, dass sie mit einer Spannvorrichtung einer Werkzeugmaschine (nicht dargestellt) koppelbar sind und zwar derart, dass die beiden Stumpfabschnitte 20 derart positioniert und orientiert sind, wie es der Situation im Mund des Patienten entspricht.

Der Rohling 50 umfasst bei dieser Ausführungsform zwei Ausnehmungen 52, eine für jeden der beiden Stumpfabschnitte 20. Die Ausnehmungen 52 sind derart positioniert, dass sie gleichzeitig jeweils einen der beiden Stumpfabschnitte aufnehmen können. Auf diese Weise kann der Rohling 50 gleichzeitig mit beiden Adaptern 10 verbunden werden. Die Position und Orientierung des Rohling 50 ist dann in der Werkzeugmaschine bekannt und der Rohling kann sehr präzise bearbeitet werden.

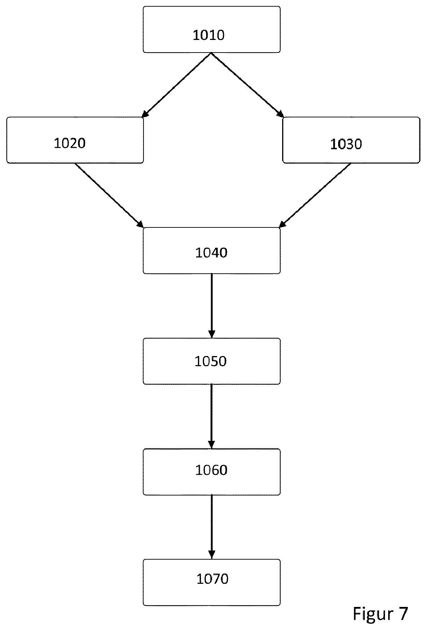

Die Figur 7 zeigt schematisch den Verfahrensablauf eines Verfahrens zum Herstellen eines mit einem Zahnstumpf verbindbaren Zahnersatzteils. In Schritt 1010 wird zunächst die Form und Größe des Zahnstumpfes erfasst und dadurch ein Stumpfdatensatz bereitgestellt. Anschließend wird unter Verwendung des Stumpfdatensatzes in Schritt 1020 ein Adapter für eine Werkzeugmaschine hergestellt, wobei der Adapter einen Stumpfabschnitt aufweist, der in Form und Größe dem Zahnstumpf entspricht, und wobei der Adapter einen Kopplungsabschnitt aufweist, der mit einer Spannvorrichtung einer Werkzeugmaschine koppelbar ist.

Parallel dazu wird in Schritt 1030 ebenfalls unter Verwendung des Stumpfdatensatzes ein Rohling des Zahnersatzteils hergestellt, wobei der Rohling eine Ausnehmung aufweist, die den Zahnstumpf zumindest teilweise aufnehmen kann.

Der Adapter und der Rohling werden in Schritt 1040 miteinander verbunden, wobei der Stumpfabschnitt des Adapters zumindest teilweise von der Ausnehmung des Rohlings aufgenommen wird. Anschließend wird in Schritt 1050 der Kopplungsabschnitt des Adapters in die Spannvorrichtung der Werkzeugmaschine eingespannt.

Der Rohling wird daraufhin in Schritt 1060 mittels der Werkzeugmaschine additiv und/oder subtraktiv in das Zahnersatzteil umgearbeitet. Dabei wird der Rohling unter anderem beschichtet.

In Schritt 1070 wird das fertige Zahnersatzteil von dem Adapter entfernt. Im Anschluss daran kann das Zahnersatzteil verwendet werden, also in einem Mund einer zu behandelnden Person eingesetzt werden.

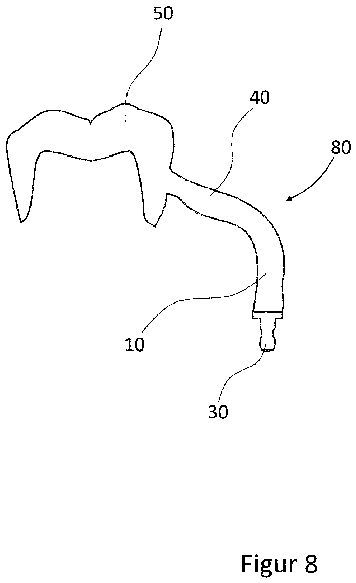

In Figur 8 ist ein Adapter-Rohling-Teil 80 mit einem Adapter 10 und einem Rohling 50 dargestellt. Adapter 10 und Rohling 50 sind einteilig miteinander verbunden. Der Adapter 10 weist bei dieser Ausführung keinen Stumpfabschnitt auf. Vielmehr ist der Adapter 10 an einem Ende mit dem Rohling 50 verbunden und an dem anderen Ende weist der Adapter 10 einen Kopplungsabschnitt 30 auf, der so ausgestaltet ist, dass er mit einer Spannvorrichtung einer Werkzeugmaschine (nicht dargestellt) koppelbar ist. Ein Verbindungsabschnitt 40 verbindet die beiden Enden des Adapters 10.

Aufgrund der bekannten Form und Größe des Adapter-Rohling-Teils 80 sowie der genauen Anordnung des Adapter-Rohling-Teils 80 in der Werkzeugmaschine kann der Rohling 50 sehr präzise bearbeitet werden. Zudem kann das Adapter-Rohling-Teil 80 beliebig oft aus- und wieder eingespannt werden, ohne dass die Präzision der Bearbeitung leidet.

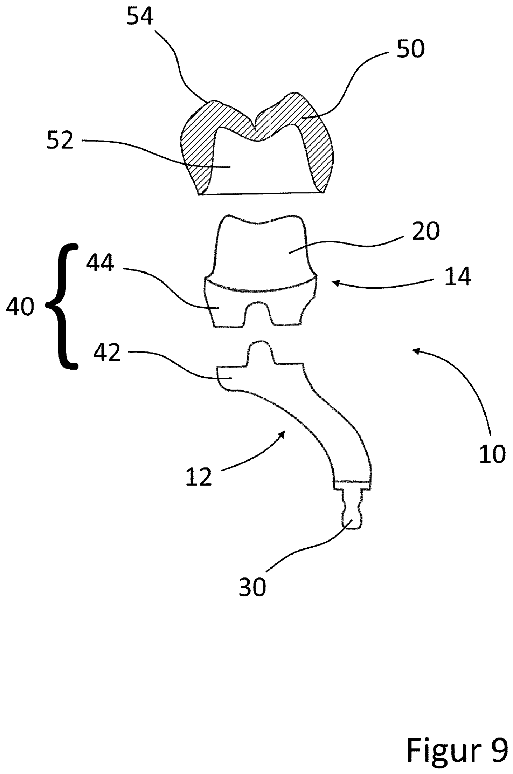

Das in Figur 9 dargestellte Set umfasst einen Adapter 10 und einen Rohling 50. Der Rohling 50 umfasst eine Ausnehmung 52 für einen Zahnstumpf (hier nicht dargestellt) sowie eine Außenseite 54, die noch nachbearbeitet werden soll.

Der Adapter 10 ist bei dieser Ausführungsform mehrteilig. Ein erstes Adapterteil 12 umfasst den Kopplungsabschnitt 30 und ein erstes Verbindungsteil 42. Ein zweites Adapterteil 14 umfasst den Stumpfabschnitt 20 und ein zweites Verbindungsteil 44. Die Verbindungsteile 42, 44 sind komplementär zueinander ausgebildet und können temporär miteinander verbunden werden, beispielsweise mittels eines Klebstoffs. Sie bilden gemeinsam den Verbindungsabschnitt 40 des Adapters 10 aus. Durch die Mehrteiligkeit kann das erste Adapterteil 12 auch mit anderen zweiten Adapterteilen 14, die an andere Zahnstümpfe angepasst sind, verbunden und dadurch wiederverwendet werden.

### Bezugszeichenliste

- 10: Adapter
- 12: erstes Adapterteil
- 14: zweites Adapterteil
- 20: Stumpfabschnitt
- 30: Kopplungsabschnitt
- 40: Verbindungsabschnitt
- 42: erstes Verbindungsteil
- 44: zweites Verbindungsteil
- 50: Rohling
- 52: Ausnehmung
- 54: Außenseite
- 60: Klebstoff
- 80: Adapter-Rohling-Teil

- 100: Kiefer
- 110: Zahnstumpf
- 112: unterer Bereich
- 114: oberer Bereich
- 116: Zahnfleisch

- 200: Zahnersatzteil
- 210: Zement

## Patentansprüche

1. Verfahren zum Herstellen eines mit einem Zahnstumpf (110) verbindbaren Zahnersatzteils (200), insbesondere eines festsitzenden Zahnersatzteils (200), mit folgenden Schritten:
a) Bereitstellen eines Stumpfdatensatzes mit dreidimensionalen Daten zu Form und Größe des Zahnstumpfes (110)
b) Herstellen eines Adapters (10) für eine Werkzeugmaschine unter Verwendung des Stumpfdatensatzes, wobei der Adapter (10) insbesondere einen Stumpfabschnitt (20) aufweist, der in Form und Größe dem Zahnstumpf (110) entspricht, und wobei der Adapter (10) einen Kopplungsabschnitt (30) aufweist, der mit einer Spannvorrichtung einer Werkzeugmaschine koppelbar ist
c) Herstellen eines Rohlings (50) unter Verwendung des Stumpfdatensatzes parallel zur Herstellung des Adapters (10), wobei der Rohling (50) eine Ausnehmung (52) aufweist, die den Zahnstumpf (110) zumindest teilweise aufnehmen kann
d) Verbinden des Rohlings (50) mit dem Adapter (10), wobei insbesondere der Stumpfabschnitt (20) des Adapters (10) zumindest teilweise von der Ausnehmung (52) des Rohlings (50) aufgenommen wird
e) Einspannen des Kopplungsabschnitts (30) in die Spannvorrichtung der Werkzeugmaschine
f) Additives und/oder subtraktives Umarbeiten des Rohlings (50) in das Zahnersatzteil (200) mittels der Werkzeugmaschine
g) Entfernen des Zahnersatzteils (200) von dem Adapter (10)

2. Verfahren nach Anspruch 1,
**dadurch gekennzeichnet, dass** der Adapter (10) in Schritt b) und/oder der Rohling (50) in Schritt c) durch Gießen, Zerspanen, insbesondere Fräsen, Schleifen und/oder Drehen, und/oder durch additive Verfahren hergestellt wird.

3. Verfahren nach einem der vorhergehenden Ansprüche,
**dadurch gekennzeichnet, dass** der Stumpfdatensatz in Schritt a) durch Erfassen der Form und Größe des Zahnstumpfes (110) bereitgestellt wird.

4. Verfahren nach Anspruch 3,
**dadurch gekennzeichnet, dass** das Erfassen der Form und Größe des Zahnstumpfes (110) unmittelbar im Mund einer zu behandelnden Person erfolgt oder dass das Erfassen der Form und Größe des Zahnstumpfes (110) durch Scannen eines Modells erfolgt.

5. Verfahren nach einem der vorhergehenden Ansprüche,
**dadurch gekennzeichnet, dass** der Rohling (50) in Schritt d) lösbar stoffschlüssig mit dem Adapter (10) verbunden wird, insbesondere verklebt wird.

6. Verfahren nach einem der vorhergehenden Ansprüche,
**dadurch gekennzeichnet, dass** die Ausnehmung (52) in Schritt c) hinsichtlich Form und Größe derart ausgestaltet wird, dass bei dem Verbinden in Schritt d) ein Zwischenvolumen zwischen Ausnehmung (52) und Stumpfabschnitt (20) verbleibt, wobei das Zwischenvolumen mit einem Verbindungsstoff gefüllt wird.

7. Verfahren nach einem der vorhergehenden Ansprüche,
**dadurch gekennzeichnet, dass** das Zahnersatzteil (200) in Schritt g) von dem Adapter (10) entfernt wird, indem die stoffschlüssige Verbindung aufgeschmolzen wird, insbesondere in einem Ofen.

8. Verfahren nach einem der vorhergehenden Ansprüche,
**dadurch gekennzeichnet, dass** das additive Umarbeiten in Schritt f) ein Beschichten umfasst und/oder dass das subtraktive Umarbeiten in Schritt f) ein Fräsen, ein Schleifen und/oder ein Polieren umfasst.

9. Verfahren nach einem der vorhergehenden Ansprüche,
**dadurch gekennzeichnet, dass** der Adapter (10) mehrere Stumpfabschnitte (20) aufweist, wobei jeder Stumpfabschnitt (20) in Form und Größe einem unterschiedlichen Zahnstumpf (110) entspricht.

10. Verfahren nach einem der vorhergehenden Ansprüche,
**dadurch gekennzeichnet, dass** der Adapter (10) mehrteilig ist, wobei ein Adapterteil (14) des mehrteiligen Adapters (10) den Stumpfabschnitt (20) und ein anderer Adapterteil (12) des mehrteiligen Adapters (10) den Kopplungsabschnitt (40) aufweist.

## Claims

1. A method for manufacturing a dental prosthesis part (200) that can be connected to a tooth stump (110), in particular a fixed dental prosthesis part (200), with the following steps:
a) providing a stump data set with three-dimensional data on the shape and size of the tooth stump (110)
b) manufacturing an adapter (10) for a machine tool using the stump data set, the adapter (10) having in particular a stump section (20) which corresponds in shape and size to the tooth stump (110), and the adapter (10) having a coupling section (30) which can be coupled to a clamping device of a machine tool
c) manufacturing a blank (50) in parallel to manufacturing the adapter (10) using the stump data set, the blank (50) having a recess (52) that can at least partially receive the tooth stump (110)
d) connecting the blank (50) to the adapter (10), wherein in particular the stump section (20) of the adapter (10) is at least partially received by the recess (52) of the blank (50)
e) clamping the coupling section (30) in the clamping device of the machine tool
f) additive and/or subtractive reworking of the blank (50) into the dental prosthesis part (200) by means of the machine tool
g) removing the dental prosthesis part (200) from the adapter (10).

2. The method according to claim 1, **characterized in that** the adapter (10) in step b) and/or the blank (50) in step c) is/are produced by casting, machining, in particular milling, grinding and/or turning, and/or by additive methods.

3. The method according to one of the preceding claims, **characterized in that** the stump data set is provided in step a) by determining the shape and size of the tooth stump (110).

4. The method according to claim 3, **characterized in that** the shape and size of the tooth stump (110) are determined directly in the mouth of a person to be treated or **in that** the shape and size of the tooth stump (110) are determined by scanning a model.

5. The method according to any of the preceding claims, **characterized in that** the blank (50) is detachably adhesively bonded to the adapter (10) in step d), in particular is adhesively bonded thereto.

6. The method according to one of the preceding claims, **characterized in that** the recess (52) in step c) is designed in terms of shape and size such that, when connecting in step d), an intermediate volume remains between the recess (52) and the stump section (20), the intermediate volume being filled with a connecting material.

7. The method according to any of the preceding claims, **characterized in that** the dental prosthesis part (200) is removed from the adapter (10) in step g) by melting the adhesive bond, in particular in a furnace.

8. The method according to any of the preceding claims, **characterized in that** the additive reworking in step f) comprises coating and/or that the subtractive reworking in step f) comprises milling, grinding and/or polishing.

9. The method according to any of the preceding claims, **characterized in that** the adapter (10) has a plurality of stump sections (20), each stump section (20) corresponding in shape and size to a different tooth stump (110).

10. The method according to any of the preceding claims, **characterized in that** the adapter (10) is multi-part, wherein one adapter part (14) of the multi-part adapter (10) has the stump section (20) and another adapter part (12) of the multi-part adapter (10) has the coupling section (40).

## Revendications

1. Procédé de fabrication d'une pièce de restauration dentaire (200) pouvant être connectée à un moignon dentaire (110), notamment d'une pièce de restauration dentaire fixe (200), avec les étapes suivantes :
a) mise à disposition d'un ensemble de données de moignon avec des données tridimensionnelles concernant la forme et la taille du moignon dentaire (110),
b) fabrication d'un adaptateur (10) pour une machine-outil avec utilisation de l'ensemble de données de moignon, l'adaptateur (10) comprenant notamment une partie de moignon (20) qui correspond au moignon (110) en forme et en taille, l'adaptateur (10) comprenant une partie d'accouplement (30) qui peut être accouplée à un dispositif de serrage d'une machine-outil,
c) fabrication d'une ébauche (50) avec utilisation de l'ensemble de données de moignon, parallèlement à la fabrication de l'adaptateur (10), l'ébauche (50) comprenant un évidement (52) qui peut recevoir le moignon (110) au moins partiellement,
d) connexion de l'ébauche (50) à l'adaptateur (10), plus particulièrement, la partie de moignon (20) de l'adaptateur (10) étant reçu au moins partiellement par l'évidement (52) de l'ébauche (50),
e) serrage de la partie d'accouplement (30) dans le dispositif de serrage de la machine-outil,
f) transformation additive et/ou soustractive de l'ébauche (50) en la pièce de restauration dentaire (200) au moyen de la machine-outil,
g) enlèvement de la pièce de restauration dentaire (200) de l'adaptateur (10).

2. Procédé selon la revendication 1, **caractérisé en ce que** l'adaptateur (10) à l'étape b) et/ou l'ébauche (50) à l'étape c) est fabriqué par moulage, usinage, notamment par fraisage, ponçage et/ou tournage, et/ou par des procédés additifs.

3. Procédé selon l'une des revendications précédentes, **caractérisé en ce que** l'ensemble des données de moignon à l'étape a) est mis à disposition par saisie de la forme et de la taille du moignon dentaire (110).

4. Procédé selon la revendication 3, **caractérisé en ce que** la saisie de la forme et de la taille du moignon dentaire (110) est effectuée directement dans la bouche du patient ou que la saisie de la forme et de la taille du moignon dentaire (110) est effectuée en scannant un modèle.

5. Procédé selon l'une des revendications précédentes, **caractérisé en ce que** l'ébauche (50) à l'étape d) est reliée à l'adaptateur (10) de manière amovible, notamment est collé.

6. Procédé selon l'une des revendications précédentes, **caractérisé en ce que** l'évidement (52) à l'étape c), par rapport à la forme et à la taille, est configuré de manière telle que, lors d'un raccordement à l'étape d), un volume intermédiaire demeure entre l'évidement (52) et le moignon (20), l'espace étant rempli d'un matériau liant.

7. Procédé selon l'une des revendications précédentes, **caractérisé en ce que** la pièce de restauration dentaire (200), à l'étape g), est enlevée de l'adaptateur (10) en fondant la liaison par pénétration de matière, notamment dans un four.

8. Procédé selon l'une des revendications précédentes, **caractérisé en ce que** la transformation additive comprend, à l'étape f), un enrobage et/ou que la transformation soustractive, à l'étape f), comprend un fraisage, un ponçage et/ou un polissage.

9. Procédé selon l'une des revendications précédentes, **caractérisé en ce que** l'adaptateur (10) comprend plusieurs parties de moignon (20), chaque partie de moignon (20) correspondant dans la forme et la taille à un moignon dentaire différent (110).

10. Procédé selon l'une des revendications précédentes, **caractérisé en ce que** l'adaptateur (10) se compose de plusieurs parties, une partie d'adaptateur (14) de l'adaptateur à plusieurs parties (10) comprenant la partie de moignon (20) et une autre partie d'adaptateur (12) de l'adaptateur à plusieurs parties (10) comprenant la partie de couplage.
